# DEMANDE DE BREVET EUROPEEN

(11) **EP 0 834 789 A1**
(43) Date de publication de la demande: **08.04.1998**
(21) Numéro de dépôt: 97402132.1
(22) Date de dépôt: 15.09.1997
(51) Int. Cl.: G05D 16/20, H02P 7/622, F24D 19/10

(54) **Groupe motopompe autorégulé**

(30) Priorité: 04.10.1996 FR 9612114
(71) Demandeur: KSB S.A., 92230 Gennevilliers (FR)
(72) Inventeur: Ogier, Sylvain, 36000 Chateauroux (FR); Vigier, Laurent, 36000 Chateauroux (FR)
(74) Mandataire: Eidelsberg, Victor Albert

(57) **Abrégé**

Ce groupe motopompe comporte des moyens (15 à 18) électroniques destinés à mesurer la différence de tension aux bornes du moteur (1) induite par une variation du débit de la pompe (3) et à calculer, à partir de cette différence de tension, de la valeur de la consigne et de la tension initiale, la commande de vitesse et la nouvelle valeur de consigne.

## Description

Afin de réguler la pression d'un circuit hydraulique, tel qu'un circuit de chauffage, pourvu ou non de robinets thermostatiques, on fait appel à des capteurs physiques de pression ou de débit montés sur le circuit de chauffage ou à des capteurs de vitesse intégrés à la pompe. L'information fournie par le capteur est traitée par un dispositif électronique. La comparaison de cette valeur avec la valeur de consigne sert à modifier la commande de la vitesse.

Monter un capteur sur le circuit et le raccorder au groupe motopompe nécessite la présence d'un spécialiste. Intégrer un capteur de vitesse à la pompe oblige, soit à augmenter la dimension de la volute, soit, si le capteur de vitesse est intégré au stator, à prévoir un moteur particulier qui n'est plus standard. En outre, si le capteur tombe en panne, la pression dans le circuit de chauffage n'est plus régulée.

Au EP 0091869, on évoque, dans une variante juste énoncée à la fin de la description, un groupe motopompe comprenant un moteur électrique dont l'arbre entraîne une pompe et qui comporte un bobinage principal dans la branche duquel est monté un triac et un bobinage auxiliaire dans la branche duquel est monté un condensateur permanent, et un circuit de commande du triac en fonction de la pression réelle de la pompe représentée par une tension. On utilise ainsi le moteur lui-même comme capteur.

L'inconvénient de cette technique est que la gamme de débits pour laquelle la pression est régulée est étroite. En particulier, la régulation ne peut pas s'effectuer aux débits petits.

L'invention y remédie par un groupe tel que défini à la partie caractérisante de la revendication 1.

La réaction du moteur à une variation de débit dans le circuit sert à détecter cette variation et le circuit de commande permet d'adapter la vitesse du moteur à ce nouveau point de fonctionnement en débit et en pression. Le groupe motopompe ne comporte pas de capteur physique de vitesse et ne nécessite pas de capteur physique de pression ou de débit sur le circuit hydraulique, notamment le circuit de chauffage auquel il est associé.

De préférence, le circuit de commande opère en logique floue.

Au dessin annexé, donné uniquement à titre d'exemple :
la figure 1 est un schéma d'un circuit de chauffage,
la figure 2 est un schéma du circuit électrique du moteur de la pompe, et
la figure 3 est une courbe caractéristique de la pompe.

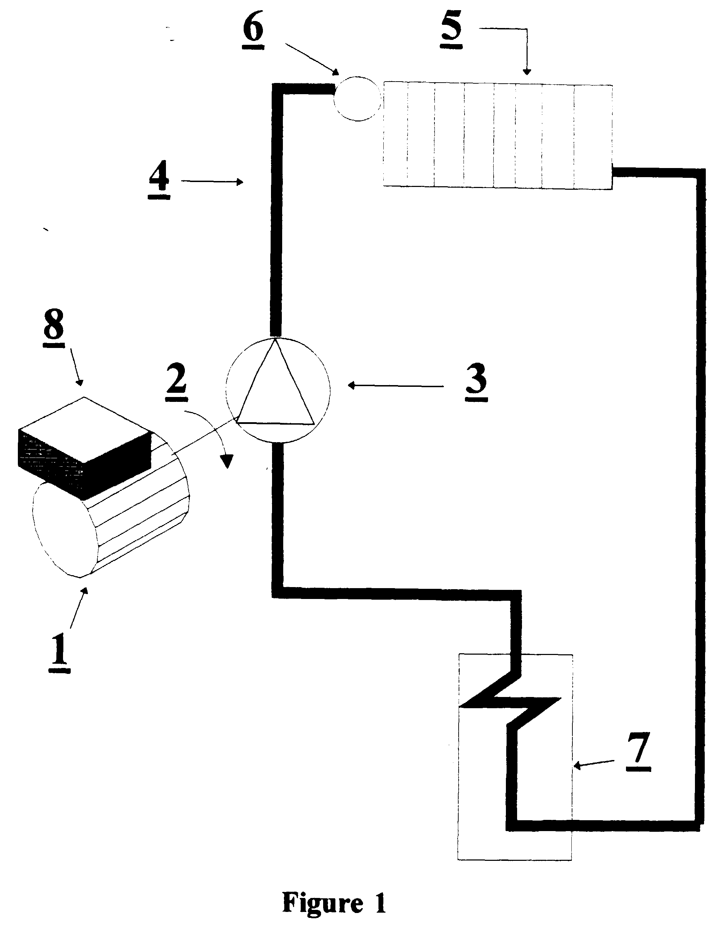

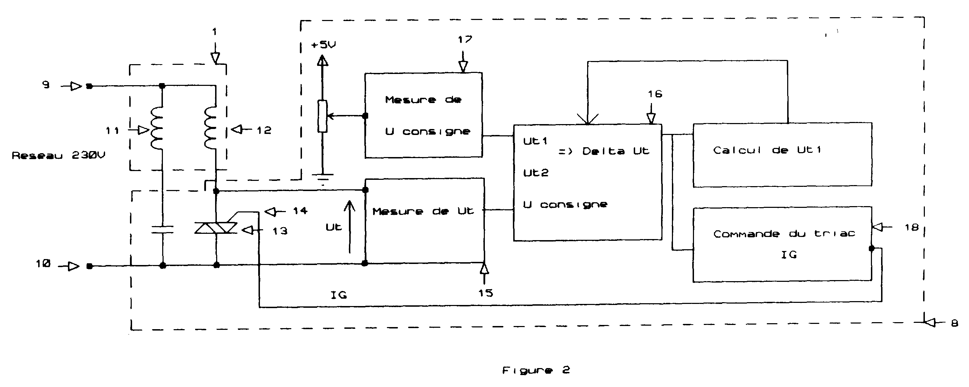

L'installation de chauffage représentée à la figure 1 comporte un moteur 1 dont l'arbre 2 entraîne une pompe 3 montée sur un circuit 4 de chauffage. Sur le circuit 4 est monté un radiateur 5 ayant un robinet 6 thermostatique ainsi qu'une chaudière 7. Le moteur comprend un circuit 8 électronique de commande, dont un schéma est donné à la figure 2.

Aux bornes 9, 10 du secteur est branché le moteur 1 qui comprend un bobinage 11 auxiliaire et un bobinage 12 principal. Dans la branche du bobinage 11 auxiliaire est monté un condensateur permanent pour le démarrage, tandis que dans la branche où est monté le bobinage 12 principal est prévu un triac 13 faisant partie ainsi que le condensateur du circuit 8. Le triac reçoit d'une ligne 14 un courant d'une valeur de consigne lG. Aux bornes du triac est monté un circuit 15 de mesure de la tension UT. Ce circuit 15 est raccordé à un micro-contrôleur 16 dans lequel on mesure la différence de tension entre la tension UT initiale et la tension UT2 réelle pour obtenir une différence de tension ΔUT. Il est envoyé également au micro-contrôleur 16 une tension de consigne par un dispositif 17 de mesure de consigne. Cette mesure de consigne représente la pression que l'on souhaite établir dans le circuit de chauffage. Le micro-contrôleur 16 calcule en logique floue, à partir de la tension initiale, de la différence de tension et de la tension de consigne, une nouvelle valeur de consigne de la vitesse du moteur, qui est envoyée par un circuit 18 de commande du triac au triac 13.

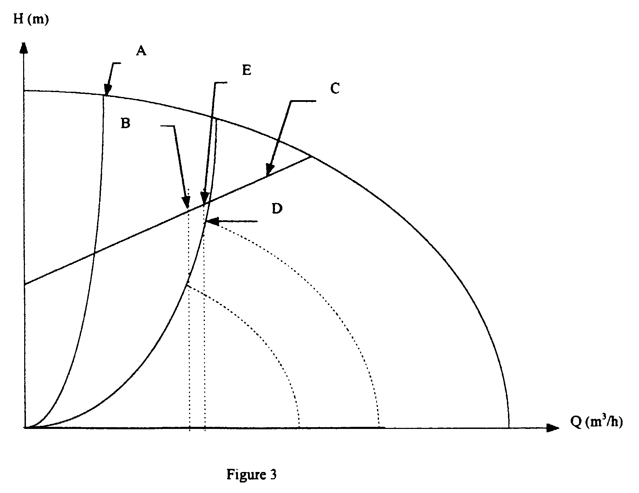

La figure 3 est une courbe représentant la caractéristique QH débit pression de la pompe. Sans régulation et pour un état donné d'ouverture du robinet 6 thermostatique, la pompe fonctionnerait au point A avec un débit Q1. En raison de la régulation, elle fonctionne en un point B au même débit Q1 sur la courbe de consigne C. Si le robinet 6 thermostatique s'ouvre davantage, la pompe a tendance à fonctionner au point D à un débit Q2 plus grand. Mais la régulation va ramener le point de fonctionnement au point E à même débit Q2 sur la courbe de consigne C.

Cette régulation est efficace même à des débits petits.

## Revendications

1. Groupe motopompe comprenant un moteur (1) électrique dont l'arbre (2) entraîne une pompe (3) et qui comporte un bobinage principal (12) dans la branche duquel est monté un triac (13) et un bobinage auxiliaire (11) dans la branche duquel est monté un condensateur permanent, et un circuit de commande (14 à 18) du triac (13) en fonction de la pression réelle de la pompe (3) représentée par une tension, caractérisé en ce que la tension représentative de la pression de la pompe (3) est prise aux bornes du triac (13).

2. Groupe motopompe suivant la revendication 1, caractérisé en ce qu'il ne comporte pas de capteur de vitesse.

3. Groupe motopompe suivant la revendication 1 ou 2, caractérisé en ce que le circuit de commande (15 à 18) opère en logique floue.
